# EUROPÄISCHE PATENTANMELDUNG

(11) **EP 0 932 232 A1**
(43) Veröffentlichungstag der Anmeldung: **28.07.1999**
(21) Anmeldenummer: 98117507.8
(22) Anmeldetag: 15.09.1998
(51) Int. Cl.: H02G 3/06

(54) **Winkelanschlussabdeckung zwischen zwei aufeinanderfolgenden Winkelabschnitten eines Sockelleistenkanals oder ähnlichen Elementen**

(30) Priorität: 23.01.1998 FR 9800884
(71) Anmelder: REHAU AG + Co, 95111 Rehau (DE)
(72) Erfinder: Frey, Bertrand, 57343 Morhange Cedex (FR); Stengel, Christian, 57343 Morhange Cedex (FR)

(57) **Zusammenfassung**

Die Winkelanschlußabdeckung (14) ist konzipiert, um die geometrischen Schwachstellen des Tetraeders (8) auszugleichen, in dem die aufeinanderfolgenden Teilabschnitte (2) und (3) des Sockelleistenkanals bei einem ausspringenden oder einspringenden Dieder (6) zusammenlaufen.

Diese Abdeckung (14) besteht aus einem gebogenen Element mit einem aufrechten Bestandteil (15), auf das ein flaches gekrümmtes Oberteil (19) folgt, das senkrecht zum aufrechten Teil steht. Die dem Winkel gegenüberliegenden Kanten dieses Oberteils lassen sich durch Zerlegen gemäß vorgeschnittener bzw. markierter Kantenbereiche an den Wert des Winkels anpassen.

Der hintere Bereich des aufrechten Teils ist mit Arretierungsfüßen (29) versehen, die die Tiefeneinstellung erlauben. Diese Füße (29) wirken mit den Klemmstrukturen (31 - 34) der Außenblenden (12) und (13) jedes Teilabschnitts des Sockelleistenkanals zusammen.

Die Erfindung ist für Hersteller von Sockelleistenkanälen, Minikanälen, Kabelkanälen oder ähnlichen Elementen von Interesse, die für die Verlegung von Kabeln und Leitern im Innern von Zimmern und sonstigen Räumlichkeiten vorgesehen sind.

## Beschreibung

Die vorliegende Erfindung betrifft den Bereich der Stromverteilung in Gebäuden und Wohnräumen mittels Kabelverbindungen, die in linearen Kabelführungskörpern mit innenliegenden Kanälen und Abdeckungen untergebracht sind, wobei diese Kabelführungskörper dazu dienen, auf einem ebenen Träger wie einer Mauer, einer Wand oder Zwischenwand angebracht zu werden.

Die linearen Kabelführungskörper, die im allgemeinen als Kabelkanal, Minikanal oder Sockelleistenkanal bezeichnet werden, erlauben die Verlegung, Befestigung und Anordnung elektrischer Leiter-, Verteilungs- und Anschlußelemente unter geeigneten Bedingungen, wie zum Beispiel Steckdosen, Telefon-, Computer- und Fernsehsteckdosen u.a. Ihr Zweck ist es, einen geeigneten Schutz für die Stromverteilungsleiter zwischen diesen Komponenten zu bieten.

Es hat sich als notwendig erwiesen, diese geradlinigen Körper mit Winkelabdeckungen zu versehen, die für die Abdeckung der Unterbrechungen in den Winkeln bestimmt sind.

Die Erfindung bezieht sich inbesondere auf Winkelanschlußabdeckungen zwischen den Enden zweier aufeinanderfolgender Winkelabschnitte ein und desselben Sockelleistenkanals oder ähnlicher Elemente, die für die Verkleidung des Winkels dienen, wobei gleichzeitig etwaige geometrische Schwachstellen des Tetraeders ausgeglichen werden sollen, der durch die Verbindung der beiden aneinanderstoßenden Seitenwände des Winkels und der Bodenfläche enststeht.

Bei dem Winkel, der zwischen den beiden Teilabschnitten des an die winkelbildenden Seitenwände angebrachten Sockelleistenkanals entsteht, handelt es sich im allgemeinen um einen einspringenden oder ausspringenden rechten Winkel. Aufgrund von Ungenauigkeiten in der Ausführung schwankt jedoch häufig der Wert des Winkels zwischen den Enden der beiden aufeinanderfolgenden Teilabschnitte ein und desselben Sockelleistenkanals stark zwischen den äußersten Werten 80° und 100° gegenüber dem theoretischen Wert von 90°.

Bei Verwendung eines gängigen, für einen einwandfreien rechten Winkel gefertigten Winkelstücks kann es durch diese geometrische Schwachstelle zu einem oder mehreren mehr oder weniger starken Zwischenräumen kommen, die sich nachteilig auf Ästhetik und Schutz gegen Stöße und schädliche Einwirkungen der Umgebung auswirken können. Durch die Zwischenräume besteht ferner die Gefahr, daß Materialien oder Gegenstände, die sehr dünn sind oder einen nur geringen Querschnitt aufweisen können, bis zu den unter Spannung stehenden Elementen eindringen. Diese Möglichkeit des Eindringens von Gegenständen stellt eine Gefahr für Kinder und Personen dar, die mit den Gegenständen in Kontakt stehen. Infolge des Eindringens verschiedener Objekte oder Materialien läßt sich auch eine Oxydation von Leitern feststellen sowie Kurzschlüsse und unerwünschte Verbindungen zwischen einem der Leiter und anderen elektrischen Elementen wie dem Erdleiter sowie weitere Nachteile und Gefahren.

In dem Falle, daß ein hochsteifes Anschlußteil in seiner vorgesehenen Form für einen einwandfreien 90°-Winkel verwendet werden soll, entstehen gewisse Gefahren, z.B. aufgrund dessen, daß bestimmte mechanische Elemente einer ständigen Biegespannung ausgesetzt sind. Dies kann soweit gehen, daß es unmöglich ist, die Sockelleisten selbst untereinander zu verbinden, wobei es schließlich zu Beschädigungen oder gar zu einem Bruch kommen kann, wenn der Installateur um jeden Preis zu wenig biegsame Standardelemente verwenden möchte und diese bei der Montage extrem verformt.

Vom ästhetischen Gesichtspunkt her soll die Verbindung zwischen den Enden der Teilabschnitte eines Sockelleistenkanals eine visuelle Integrierung in die Umgebung ermöglichen.

Hauptgegenstand dieser Erfindung ist eine Winkelanschlußabdeckung, die den Ausgleich von geometrischen Schwachstellen zwischen den Enden zwei aufeinanderfolgender Winkelteilabschnitte ein und desselben Sockelleistenkanals erlaubt, der in einem ausspringenden oder einspringenden Winkel angebracht wird, sowie allgemein die Ausgleichung von geometrischen Schwachstellen des in dem Raumwinkel entstehenden Tetraeders.

Die Abdeckung ermöglicht insbesondere ohne Rückgriff auf zusätzliche Elemente die Anpassung an verschiedene Winkelabweichungen gegenüber dem theoretischen Wert von 90° innerhalb einer gegebenen Schwankungsbreite.

Die Abdeckung bietet ferner ausreichenden Schutz und Dichtheit für elektrische Leiter und Komponenten, die im Inneren des Sockelleistenkanals veriegt sind, indem sie jegliches Risiko der Entstehung einer noch so kleinen Öffnung ausschaltet und ein gewisses Abdeckungsniveau zwischen den Teilabschnitten des Sockelleistenkanals gewährleistet, die unter der Abdeckung und an der Abdeckung selbst zusammenlaufen.

Durch EP Nr. 0 734 107 auf den Namen PLANET WATTOHM ist ein Anschlußteil für Winkelkörper bekannt, das für einen elektrischen Leiter und den so gebildeten Winkelkörper bestimmt ist. Bei dieser Vorrichtung sind Mittel zur Herstellung von Freiräumen vorgesehen, die dazu bestimmt sind, der Gesamtkonstruktion eine gewisse Kapazität zur Anpassung an den Wert des Winkels zwischen den beiden anzuschließenden Teilabschnitten zu verleihen, wobei dem Anschlußteil selbst jedoch keinerlei Biegsamkeit innerhalb der beiden Richtungen der Teilabschnitte des Sockelleistenkanals verliehen wird.

Die Mittel zur Herstellung von Freiräumen bestehen im wesentlichen aus den Enden der Anschlußwand, zwischen denen ein im allgemeinen schräg zwischen den Enden verlaufender Freiraum hergestellt wird. Dieser Freiraum erlaubt eine Winkelverschiebung zur Anpassung an die tatsächliche durch die Montage entstehende Orientierung der beiden Winkelteilabschnitte des Sockelleistenkanals und bietet außerdem einen gewissen Schutz und Isolierung gegenüber dem Außenbereich, die durch die Einfügung des Endteils in das Innere der als Freiraum bezeichneten Höhlung entstehen. Bei der betreffenden Einrichtung werden ferner Schürzen verwendet, um die Umgebung des Anschlußteils bei ausspringenden Winkeln zu schützen und so einen Kanal zu bilden, der eine Rippe aufnehmen kann.

Bei der Fertigung des Mittels, das zur Ausführung des Freiraums mit einem gewissen Bewegungsspielraum dient, sowie um die Schürzen herzustellen, kommt es bei dieser Vorrichtung zu einer vielfachen Überlagerung von Elementen, für deren Herstellung sehr kostpielige Materialien,inbesondere für die Gießverfahren erforderlich sind, da eine große Anzahl komplexer Formen und Volumen herzustellen ist. Auch steigt durch die große Anzahl von Teilen mit geringer Stärke die Bruchgefahr im Zeitpunkt der Montage, ja sogar bei einer Alterung des verwendeten Materials.

Durch Patent FR Nr. 2 731 496 auf den Namen PLANET WATTOHM ist eine Winkelanschlußvorrichtung für Kabelführungsrinnen mit Abdeckung bekannt, wie z.B. Minikanäle, Sockelleistenkanäle und Kabelkanäle, die insbesondere für elektrische Geräte verwendet werden.

In diesem Dokument wird eine Kombination aus steifen Teilen und Scharnierteilen beschrieben, deren Gelenkfunktion durch Biegung erreicht wird, die dadurch möglich ist, daß Ansatzstücke und Scharniere sehr dünn gegossen werden. Ferner sind bei dem verwendeten Sockelleistenkanaltyp, bei dem eine Kombination aus rechtwinkligen und abgerundeten Formen benutzt wird, im Falle von Sockelleistenkanälen, die einen ausspringenden oder einspringenden Winkel bilden, neben einem Anschluß zwischen den mit 90° längs zueinander liegenden Flächen, Elemente mit dreidimensionaler konkaver oder konvexer Biegung erforderlich, die als Kappe bezeichnet werden und dazu bestimmt sind, sich an die gebogenen, zu den Sockelleistenkanälen gehörenden Elemente anzupassen. Schließlich wird die eigentliche Anschlußfunktion zwischen den Formen der Enden des Sockelleistenkanals durch eine Kappe gewährleistet, die durch eine Kombination aus Innen- und Außenflächen hergestellt wird, die Stützen sowie eine Haut aus chemisch nicht kompatiblen Kunststoffen bilden, durch die die Abformung der Haut auf den Stützen ohne Adhäsionsrisiko möglich ist. Die Stützen bestehen aus gebogenen, in Kammform zusammengefaßten Stäben, die ineinander eingeschoben werden können und so einen Träger für die Haut bilden und eine gewisse Winkeländerung bei der Montage erlauben.

Diese Vorrichtung, bei der auf steife innenliegende und biegsame außenliegende Elemente zurückgegriffen wird, ist relativ kompliziert. Die Fertigung eines Teils durch Abformen, wobei gleichzeitig zwei unterschiedliche Kunststoffe eingesetzt werden müssen, erzeugt Ausschuß und führt zu einer Beeinträchtigung der Funktionen im Falle der Materialalterung oder bei unvorsichtigen Handhabungen dieses Elements während der Montage.

Die vorliegende Erfindung löst das Problem, das durch die Schwierigkeiten entsteht, die die Anpassung an den tatsächlichen Wert des Winkels bei den vorausgehenden Winkelanschlußvorrichtungen bereitet. Durch sie wird eine Anschlußabdeckung geliefert, die mit Befestigungsmitteln versehen ist, die dazu bestimmt sind, die Abdeckung in Position zu halten und gleichzeitig deren Tiefenverstellbarkeit an den Enden der Winkelteilabschnitte eines Sockelleistenkanals zu gewährleisten, unabhängig davon, ob es sich um einen ausspringenden oder einspringenden Winkel handelt, während parallel eine Anpassung an die geometrischen Schwachstellen des Tetraeders vorgenommen wird, in dem der Anschluß erfolgt.

Gemäß einer weiteren Realisierungsform der Erfindung wird die Anschlußabdeckung für Sockelleistenverbindungen mit einer Überlagerung ausgeführt, die den Schutz der Enden der Sockelleistenkanäle an der Verbindungsstelle erlaubt und gleichzeitig die Winkelanpassungskapazitäten erhält.

Bei der erfindungsgemäßen Abdeckung wird der Winkelteil der geradlinigen Öffnung entlang des Sockelleistenkanals verwendet, die für die Einführung und Verlegung der Leiter und anderen vorgesehenen elektrischen Anschlußblöcke bestimmt ist, wobei diese Öffnung danach durch eine lineare Abdeckung oder eine Außenblende geschlossen wird. Die Arretierung der Abdeckung erfolgt durch Mittel, die sich in der Form anpassen lassen, beispielsweise durch Aufrastung, wodurch das Eindringen von Materialien und Gegenständen in das Innere des Sockelleistenkanals verhindert werden soll.

Um bei einem überlappenden Anschluß eine möglichst flach anliegende Montage auf der Vorderseite des Sockelleistenkanals zu gewährleisten, weist bei einem ausspringenden Winkel der obere Teil der Abdeckung eine Spitze mit mehreren Winkelöffnungswerten von 80° bis 100° auf, wobei durch diesen Bereich die Mehrzahl der festgestellten Winkelabweichungen abgedeckt ist.

Zur Anpassung an den realen Winkelwert werden an der Wiederkehr die eckförmigen symmetrischen Kantenteile durch Abbrechen entlang der vorgeschnittenen oder -gezeichneten Linien entfernt. Zu diesem Zweck ist der ursprüngliche Öffnungswinkel an der gelieferten Abdeckung im Falle eines einspringenden Winkels maximal geöffnet, d.h. zum Beispiel zu 100° und kann mittels des Schnittspaltes oder durch sukzessives Abschneiden auf einen Wert nahe des realen Werts gebracht werden. Ebenso verhält es sich, jedoch umgekehrt, bei ausspringenden Winkeln.

Wie angegeben hat der Öffnungswinkel in der Mitte 90°, während die äußersten Winkel eine minimale und maximale Öffnung von 80° bzw. 100° haben.

Form und Elastizität der Arretierungsfüße der Abdeckung, die mit mehreren Arretierungskanten zusammenwirken, ermöglichen es, sie in Höhe des Anschlusses durch Tiefeneinstellung so nah wie möglich an die Wände zu bringen, unabhängig vom tatsächlichen Winkel, an den die Anpassung innerhalb des vorgesehenen Bereiches zu erfolgen hat.

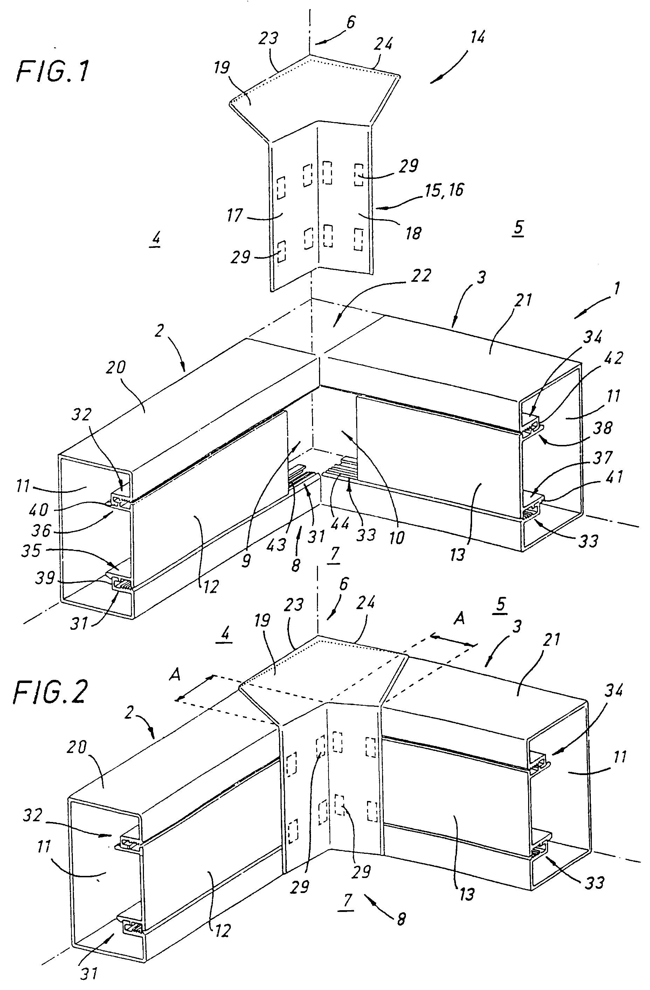

Weitere Ziele, Vorteile und Merkmale der Erfindung ergeben sich aus der folgenden Beschreibung einer Ausführungsform der Erfindung, die nicht einschränkend ist und sich auf die beigefügte Zeichnung bezieht:
- Abbildung 1 ist eine schematisierte perspektivische Ansicht, die zwei Winkelabschnitte eines Sockelleistenkanals zeigt, die in einem einspringenden Winkel angebracht sind;
- Abbildung 2 ist eine schematisierte perspektivische Ansicht entsprechend Abbildung 1 für die gleiche Variante, die die Abdeckung darstellt, die auf die Enden der beiden aufeinanderfolgenden Teilabschnitte des gleichen Sockelleistenkanals montiert ist;
- Abbildung 3 ist eine Draufsicht der Abdeckung, die die Verbindung zwischen den Enden der beiden aufeinanderfolgenden Teilabschnitte eines Sockelleistenkanals in einem Winkel zwischen Seitenwänden von 100° herstellt, wobei die gestrichelten Linien die Schnittmarkierungen für die Anpassung an den realen Wert des Winkels darstellen;
- Abbildung 4 ist eine zu Abbildung 3 analoge Draufsicht, wobei der Winkel zwischen Seitenwänden hier 80° beträgt;
- Abbildung 5 ist eine analoge Ansicht zu derjenigen von Abbildung 1, wobei hier die beiden Anschlußenden der beiden aufeinanderfolgenden Teilabschnitte eines Sockelleistenkanals bei einem ausspringenden Winkel gezeigt sind;
- Abbildung 6 ist eine analoge Ansicht zu derjenigen von Abbildung 2 und zeigt die angebrachte Abdeckung, die die Enden der Teilabschnitte des Sockelleistenkanals im Falle des ausspringenden Winkels gemäß Abbildung 5 zeigt;

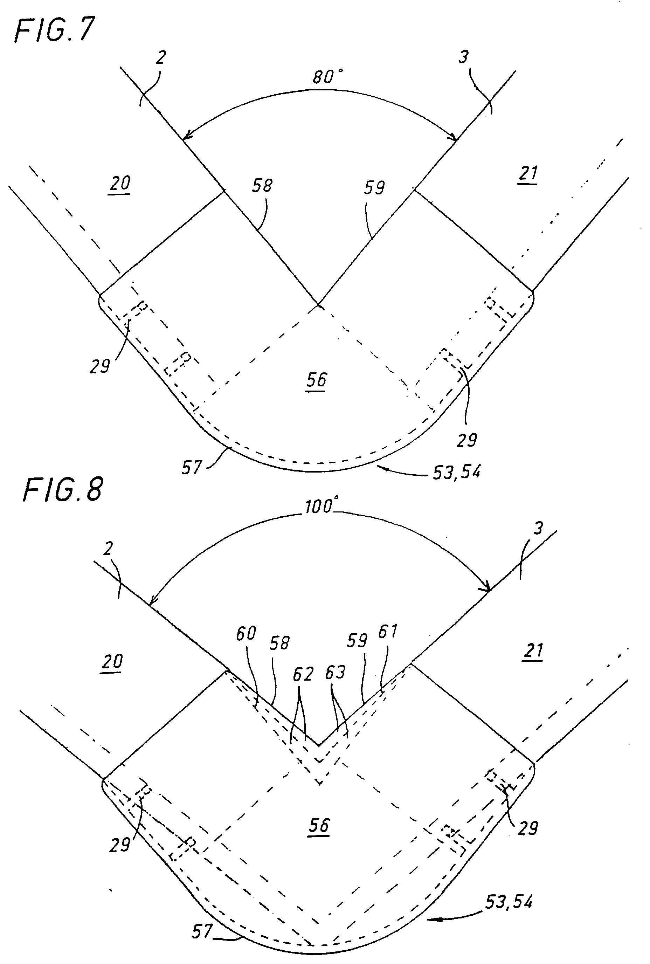

- Abbildung 7 ist eine Dreufsicht entsprechend derjenigen von Abbildung 3, in der die Abdeckung im Falle eines ausspringenden 80°-Winkels gezeigt wird;
- Abbildung 8 ist eine Draufsicht entsprechend derjenigen von Abbildung 4, worin der Winkel zwischen den Seitenwänden 100° beträgt und die Abdeckung in der montierten Form gezeigt wird. Die gestrichelten Linien stellen die Markierungen dar, die mit den dünner ausgeführten Linien verbunden sind, die die Anpassung an etwaige geometrische Schwachstellen erlauben;
- Abbildungen 9 und 10 sind perspektivische Ansichten der angebrachten und der abmontierten Abdeckung und gehören zu einem anderen Modell des Sockelleistenkanals mit Befestigungsfüßen bei einem einspringenden Winkel.
Im Folgenden wird die Vorrichtung beschrieben, die aus der Abdeckung und den Teilabschnitten der Sockelleistenkanäle besteht, angefangen mit Abbildung 1. In Abbildung 1 wurde ein Sockelleistenkanal 1 dargestellt, der aus zwei aufeinanderfolgenden Winkelabschnitten 2 und 3 besteht, die jeweils an ein Mauer- oder Wandfeld 4 und 5 angebracht sind und in einem einspringenden Winkel von ca. 90° zusammenlaufen. Dieser Dieder 6 wird durch eine Bodenfläche 7 ergänzt, wodurch ein rechtwinkliger Tetraeder 8 entsteht, der in der Praxis nur selten die exakte geometrische Form der Theorie hat. Diese Teilabschnitte 2 und 3 des Sockelleistenkanals weisen auf der Vorderseite lineare Öffnungen 9 und 10 auf, die als Zugänge zum Inneren des Hohlkörpers 11 des Sockelleistenkanals sowie zur Montage der elektrischen Verteilungs- und Anschlußelemente dienen, wie z.B. von Leitern und Steckdosen (nicht dargestellt). Die so gebildeten geradlinigen Öffnungen 9 und 10 werden mit Hilfe von Front- oder Außenblenden verschlossen, wie 12 und 13, die den Schutz gewährleisten sollen, der für die im Innern des Hohlkörpers 11 des Sockelleistenkanals installierten Leiter erforderlich ist. Dieser Frontschutz wird mittels in der Form anpaßbarer Mittel auf den Körper des Sockelleistenkanals beispielsweise durch Aufrasten montiert. Die beiden aufeinanderfolgenden Teilabschnitte 2 und 3, die an die Seitenwände 4 und 5 montiert sind, die einen einspringenden Winkel bilden, werden aus ästhetischen und technischen Gründen untereinander durch ein Winkelteil 14 verbunden, das die erfindungsgemäße Anschlußabdeckung darstellt.

In Abbildung 2 ist diese Abdeckung 14 in einem Winkel des Dieders 6 und auf den Enden der Teilabschnitte 2 oder 3 des Sockelleistenkanals verlegt dargestellt. Sie liegt auf jeder Seite auf einem Ende eines Teilabschnitts 2 bzw. 3 des Sockelleistenkanals auf und gewährleistet dadurch eine Abdeckung auf einer rechtwinkligen trapezförmigen oder dreieckigen Fläche, die eine mit dem Buchstaben A bezeichnete Längsbasis aufweist. Durch diese Ausführung soll die Abdeckung gleichzeitig Schutz und eine gewisse Dichtigkeit gegenüber Feststoffen bieten.

Die erfindungsgemäße Anschlußabdeckung 14 hat die Form eines umgekehrten L-Profilteils mit einem vertikalen, als Winkel 16 ausgeführten Schenkel 15, der sich aus zwei Flügeln 17 und 18 zusammensetzt, die genau senkrecht aufeinander stehen. Der vertikale Schenkel 15 geht nach oben über in eine Arretiervorrichtung, die in einem flachen, konisch erweiterten Fuß 19 ausgeführt ist, dessen Fläche senkrecht zur Richtung des vertikalen Schenkels 15 steht.

Der als Winkel gefertigte vertikale Schenkel 15 ist dazu gedacht, die Verbindung der Teilabschnitte des Sockelleistenkanals auf der Vorderseite zu verkleiden, während der obere konisch erweiterte Teil 19 auf die Enden der oberen Kanten 20 und 21 der Teilabschnitte des Sockelleistenkanals in Höhe des Winkels des rechtwinkligen Tetraeders 8 aufgesetzt wird.

Die Verkleidung des Winkelabschnitts ist komplett, denn sie bedeckt die Enden der Teilabschnitte 2 und 3 des Sockelleistenkanals vollständig, selbst wenn diese nicht auf Gehrung geschnitten sind, wodurch die Kanten in Höhe der halbierenden Fläche des Dieders 6 beispielsweise mit der Länge der Abdeckung A der Enden der Teilabschnitte zusammenlaufen können.

Auf diese Weise läßt sich eine Nahtstelle abdecken, die einen breiten Freiraum 22 zwischen den Enden aufweist und doch vollständig durch die erfindungsgemäße Winkelanschlußabdeckung 14 verkleidet wird.

Der obere Fuß 19 weist äußere Kanten 23 und 24 auf, die zunächst dem Winkel entsprechend zugeschnitten werden, der als repräsentativ für die größte Winkelabweichung angesehen wird, mit einem maximalen Wert wie z.B. 100° bei einem einspringenden Winkel oder einem minimalen Wert wie z.B. 80° bei einem ausspringenden Winkel, je nach Art des einspringenden oder ausspringenden Winkels.

Diese äußeren Kanten werden mit unterschiedlichen Neigungen durch Linien wiederholt wie 25 und 26, die an der Rückseite dieses oberen Fußes 19 vorgeschnitten oder als lineare Materialverdünnungen ausgeführt sind und eine beschränkte Anzahl weiterer Zwischenwinkel zwischen den Grenzenwerten 80° und 100° bilden, um eine bestmögliche Anpassung an den realen Wert des Winkels zwischen den beiden Seitenwänden 4 und 5 zu erreichen.

Selbstverständlich können die Zwischenwerte vervielfacht werden, um eine feinere Anpassung zu erreichen.

Diese vorgeschnittenen Kanten begrenzen Kantenbereiche 27 und 28, die die Form einer ablösbaren Ecke haben.

In der Praxis hat sich gezeigt, daß ein Herausschneiden nach mehreren Zwischenwerten, z.B. drei oder vier, genügt, um in praktischer Weise und ohne besondere Schwachstelle im Aussehen die Gesamtheit der festgestellten geometrischen Mängel abzudecken.

Die Erfindung geht im Hinblick auf diese Anpassung noch viel weiter, denn bei Anpassung an den geometrischen Fehler des Winkels des Dieder 6 durch den oberen Fuß 19 liefert sie ein Mittel zur Tiefeneinstellung des aufrechten vertikalen Schenkels 15 von Abdeckung 14.

Das Zurücknehmen des Winkels von Dieder 6 durch Unterteilung der eckförmigen Kantenbereiche 27 und 28 führt zu einer leichten Veränderung der Position der Abdeckung gegenüber der Vorderseite der Enden der Teilabschnitte des Sockelleistenkanals. Ferner ist ein Neigungs-, ja sogar Planheitsfehler von Bodenfläche 7 zu beachten, der eine Trägerfläche darstellt. Ferner sind Unterkeilungen in der Höhe sowie von falschen Neigungen erforderlich, die den theoretisch rechtwinkligen Tetraeder 8 bilden. Bei dem zu verkleidenden Winkel, der durch die Enden der beiden aufeinanderfolgenden Winkelteilabschnitte entsteht, kann es sich somit um einen linken Winkel handeln.

Um eine Anpassung an diese geometrischen Abweichungen zu erzielen, ermöglicht die erfindungsgemäße Abdeckung 14 überdies eine Tiefeneinstellung, die durch Arretierungsfüße wie 29 mit als Haken geformten Enden wie 30 erzielt wird, die sich auf den Rückseiten der Flügel 17 und 18 des vertikalen Schenkels 15 befinden und in zwei Gruppen unterteilt sind: in obere und untere Füße.

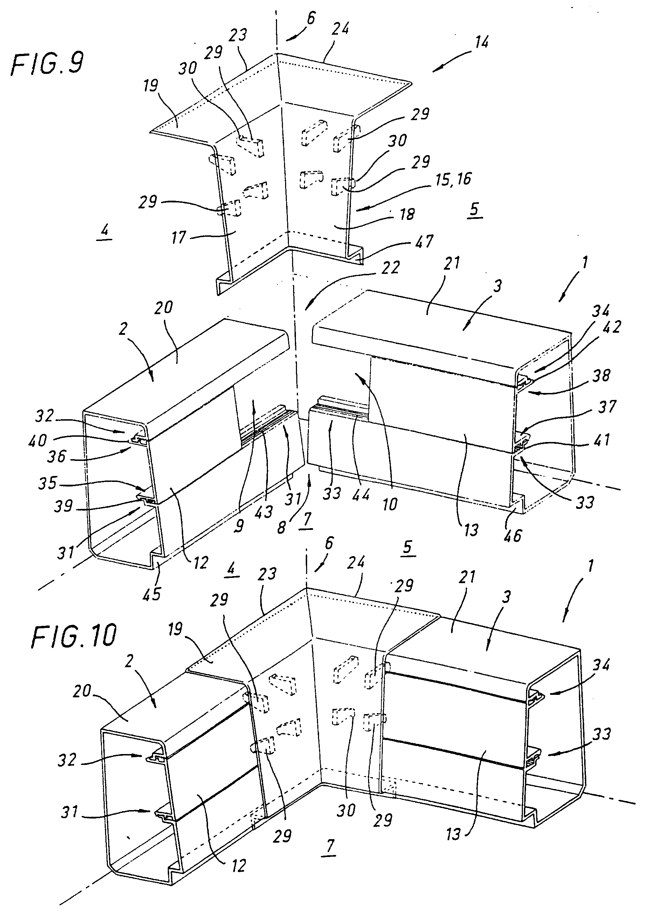

Diese in den Abbildungen 9 und 10 sichtbaren Arretierungsfüße werden in variablen Abständen von der Vorderseite des Sockelleistenkanals auf geradlinige innere Klemmstrukturen 31, 32 des Teilabschnitts 2 und 33, 34 von Teilabschnitt 3 aufgesetzt, die der Körper des Sockelleistenkanals an den Kanten der linearen Öffnungen 9 und 10 aufweist, die durch die Außenblenden 12 und 13 verschlossen sind, deren Enden zu diesem Zweck ein Stück vor den Enden der Teilabschnitte 2 und 3 des Sockelleistenkanals abschließen.

Diese linearen Klemmstrukturen 31, 32 und 33, 34 sind üblicherweise für die Arretierung der Außenblenden 12 und 13 durch Aufrastung der Endschiene ihrer jeweiligen Längsbänder 35, 36 und 37, 38 hinten auf der Längskante 39, 40 und 41, 42 der geradlinigen Klemmstrukturen 31, 32 und 33, 34 jedes Teilabschnitts des Sockelleistenkanals vorgesehen. Letztere weisen eine Reihe von Längskanten wie 43, 44 auf, die wie nach hinten geneigte Sägezähne aufeinanderfolgen und jeweils eine Arretierungskante für jedes hakenförmige Ende der Arretierungsfüße bilden sollen.

Die Endlinien dieser Kanten 43 und 44 sind zu diesem Zweck bei untenliegenden Füßen nach hinten geneigt und bei oben gelegenen Arretierungsfüßen nach oben.

Sie erlauben die Arretierung des vertikalen Schenkels 15 von Abdeckung 14 in veränderlichem Abstand von der Vorderseite der Enden der Teilabschnitte 2 und 3.

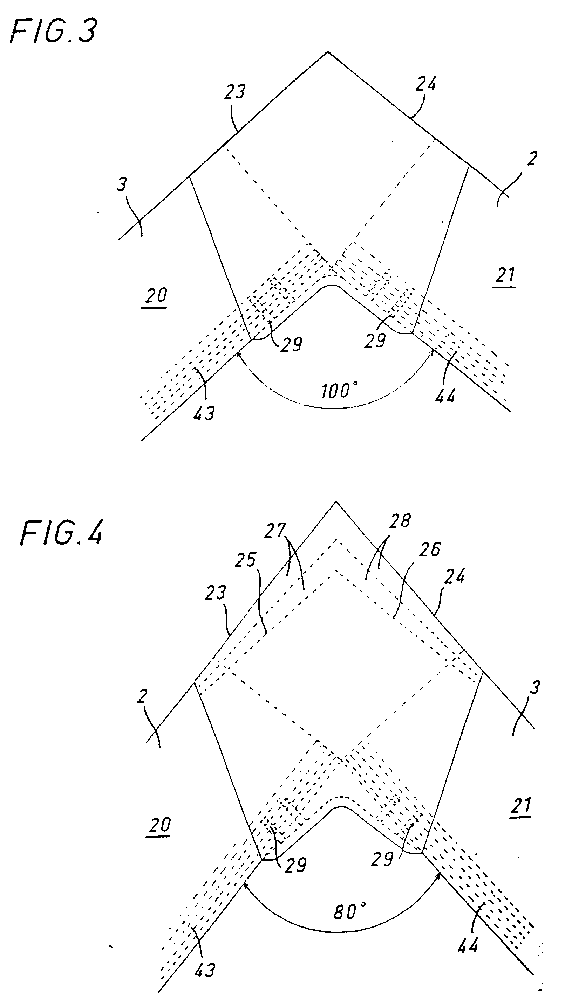

Abbildungen 3 und 4 zeigen etwas übertrieben in den Proportionen die Anpassungsfähigkeit, wobei sie die Grenzpositionen mit einem gleichen Anschlußteil jeweils bei einem Winkel von 100° und einem Winkel von 80° zeigen.

Eine zusätzliche Variante mit Sockelleistenkanalinnenschulter 45 und 46 und Abdeckungsinnenschulter 47 ist in den Abbildungen 9 und 10 dargestellt.

Man verfügt somit über eine Tiefeneinstellungsbreite, die es ermöglicht, die Neigung des Vorderteils der Abdeckung leicht zu ändern, um sie an die geometrischen Schwachstellen des rechtwinkligen einspringenden Tetraeders 8 anzupassen, in dem die Teilabschnitte des Sockelleistenkanals zusammenlaufen.

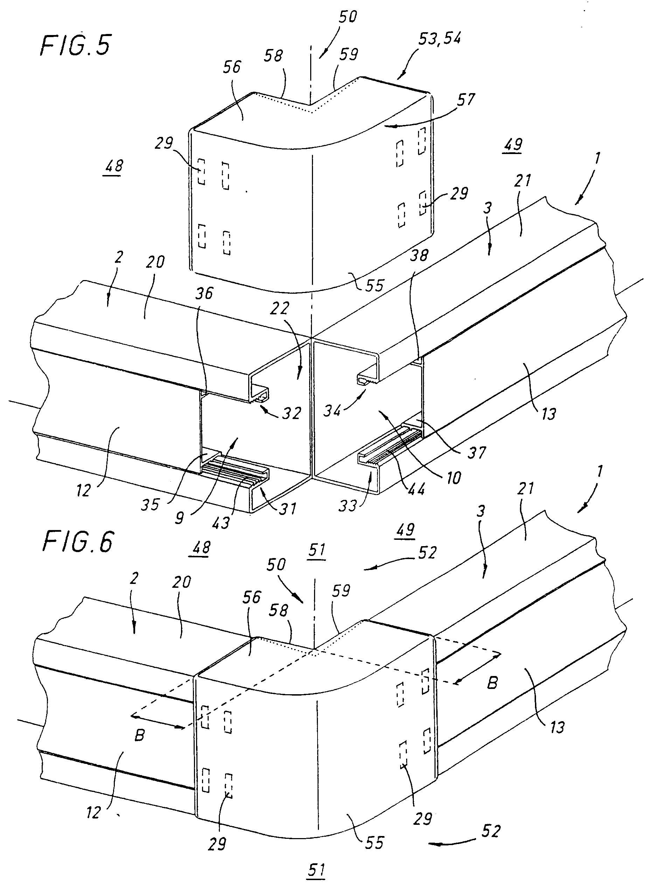

Im folgenden sollen die wesentlichen Mittel der Variante beschrieben werden, die für einen ausspringenden Winkel vorgesehen sind, der durch zwei Seitenwände 48 und 49 begrenzt ist, entsprechend der Abbildungen 5 und 6.

Die Seitenwände 48 und 49 beschreiben einen ausspringenden Dieder 50 mit einem theoretischen Winkel von 90°, der mit einer Bodenfläche 51 einen rechtwinkligen Tetraeder 52 bildet.

Die einzelnen Teile, Stücke und Funktionen der Teilabschnitte des Sockelleistenkanals 2 und 3, die miteinander identisch sind, tragen die gleichen Referenznummern.

Diese Teilabschnitte werden durch eine Abdeckung eines ausspringenden Winkels 53 in Form eines gebogenen Verkleidungsteils 54 verbunden, das sich aus einer aufrechten gebogenen Seitenflächenblende 55 zusammensetzt, die die Kontinuität auf der Höhe des rechten Winkels zwischen den oberen Kanten der Teilabschnitte 2 und 3 des Sockelleistenkanals gewährleistet. Diese aufrechte Blende 55 wird durch einen flachen oberen bogenförmigen Teil 56 erweitert, der die Kontinuität auf der Höhe des rechten Winkels zwischen den oberen Kanten der Teilabschnitte 2 und 3 des Sockelleistenkanals gewährleistet.

Dieser obere Teil 56 steht senkrecht zur Seitenflächenblende 55.

Die Enden dieses Winkelteils 54 erlauben die Abdeckung der gegenüberliegenden Enden der Teilabschnitte des Sockelleistenkanals auch bei einer extremen Position einer ihrer Kanten innerhalb der Verbindung, die in Abbildung 5 dargestellt ist, in der die Abdeckung auf einer Länge B erfolgt.

Der obere Teil weist eine äußere abgerundete Längskante 57 sowie eine Winkelkante auf, die aus zwei verbundenen Rändern 58 und 59 besteht, die - wie oben dargestellt - entlang der Kantenbereiche 60 und 61 trennbar sind, um eine Anpassung an verschiedene geometrische Schwachstellen des ausspringenden Dieders 50, z.B. zwischen den Grenzwerten 80° und 100°, zu erreichen.

Diese Variante hat eine leicht geneigte Vorderseite.

Das Ausgangswinkelteil wird dem Dieder mit dem kleinsten Winkelwert entsprechen und dieser wird z.B. durch Zerlegung entlang der vorgeschnittenen Linien 60, 61 angepaßt, die eckförmige Kantenbereiche 62 und 63 bilden, die sich zerlegen lassen, bis der dem Winkel nächstgelegene Wert erreicht ist.

Die Tiefeneinstellung ist beispielsweise auch durch Arretierungsfüße wie 29 vorgesehen, die dem Typus der bereits beschriebenen entsprechen, als Haken 30 enden und mit den Arretierungsstrukturen 31 bis 34 des Körpers des Sockelleistenkanals zusammenwirken.

Wie aus den Abbildungen 10 und 11 ersichtlich, füllen die Enden der Teilabschnitte des Sockelleistenkanals den Winkel nicht aus. Sie sind gerade geschnitten und halten die Position durch den Anschlagskontakt der Innenseiten untereinander, wobei der Zwischenraum 21 frei bleibt. Auf diese Weise vermeidet man die beim Gehrungsschneiden entstehenden Schwierigkeiten sowie die spätere Ausrichtung.

Die Außenblenden schließen ein Stück hinter den Kanten am Ende jedes Teilabschnitts ab, so daß an jedem Teilabschnitt ein Freiraum bleibt, der die geradlinige Öffnung am Ende frei läßt.

Diese Freiräume ermöglichen ein freies Eindringen der Arretierungsfüße in die linearen Klemmstrukturen im Hinblick auf deren Arretierung nach einer angemessenen Anordnung.

Die erfindungsgemäße Winkelabdeckung ist dafür bestimmt, sich an die gängigsten Formen von Sockelleistenkanälen anzupassen, d.h. an Sockelleistenkanäle mit rechtwinkligem Querschnitt und linearer, mit einer Außenblende verschlossener Öffnung, aber auch an jene, die einen Innenrücksprung aufweisen, durch den eine Anschlußschulter auf der Vorderseite mit leicht geneigter Front entsteht, wie sie in den Abbildungen 10 und 11 dargestellt ist, weshalb die Anschlußabdeckung einen unteren Teil aufweisen muß, der mit einer komplementären Innenkante versehen ist, die aus einem Rücksprung gebildet wird, auf den eine Schulter folgt.

## Patentansprüche

1. Winkelanschlußabdeckung zwischen den Enden zweier aufeinanderfolgender Teilabschnitte (2) und (3), die einen Dieder (6) und (50) bilden oder in eine Ecke in Form eines Tetraeders (8) oder (52) gesetzt werden, der von zwei aneinanderstoßenden Seitenwänden (4, 5) oder (48, 49) sowie einer Bodenfläche (7) oder (51) gebildet wird. Die zwei aufeinanderfolgenden Teilabschnitte stammen aus einem Minikanal, einem Sockelleistenkanal, einem Kabelkanal oder dergleichen, die zur Stromversorgung für Telefon und / oder Computer in einem Zimmer, einem Büro oder einer Räumlichkeit verwendet werden. Es handelt sich um eine Abdeckung, die eine Anschlußwand umfaßt, die dazu gedacht ist, die Außenform der Enden der Teilabschnitte des Sockelleistenkanals zu verdecken. Die Abdeckung ist dadurch gekennzeichnet, daß der Abdeckungskörper aus einem Winkelstück (14) oder (54), das aus einem aufrechten Teil (15) oder (55) besteht, das die Arretier- und Tiefeneinstellhilfen am Sockelleistenkanal beinhaltet, und einem Oberteil (19) oder (56) gebildet wird, das deutlich flach ist und zum aufrechten Teil senkrecht steht. Dieses Oberteil, dessen Winkelfläche von den Rändern begrenzt wird, die mit den aneinanderstoßenden und den Winkel des Dieders (6) oder (50) bildenden Seitenwänden in Berührung kommen, läßt sich durch Zerlegen in eckförmige Kantenbereiche verändern, um sich mit der Tiefeneinstelllung an die geometrischen Schwachstellen der Ecke (8) oder (52) anzupassen, die aus der Verbindung der zwei Seitenwände (4), (5) oder (48), (49) und der Bodenfläche (7) oder (51) gebildet wird. Dies ermöglicht eine Anpassung an die verschiedenen Winkelwerte des Dieders (6) oder (50) und an die geometrischen Schwachstellen des Tetraeders (8) oder (52).

2. Die Abdeckung gemäß Patentanspruch 1 ist dadurch gekennzeichnet, daß die Enden der Außenblenden (12) und (13) vor dem aneinanderstoßenden Ende eines jeden Sockelleistenkanalteilabschnitts abschließen, wodurch in der Blende ein Freiraum für das Eindringen der Arretierungshilfen bleibt.

3. Die Abdeckung gemäß Patentanspruch 1 ist dadurch gekennzeichnet, daß die Arretierungshilfen mit den geradlinigen Klemmstrukturen (31), (32) und (33), (34) der Außenblende zusammenwirken, die sich am Sockelleistenkanal befindet.

4. Die Abdeckung gemäß vorhergehendem Patentanspruch ist dadurch gekennzeichnet, daß es sich bei den Arretierungshilfen um biegsame Laschen (29) handelt, die zu jeder Fläche des aufrechten Teils senkrecht stehen. Jede Lasche wird mit einem in Form eines Hakens angeformten Endverschluß abgeschlossen, der sich gegen die Längskanten (43) und (44) klemmen wird, die entlang der Arretierstrukturen eines jeden Teilabschnitts (2) und (3) vorgesehen sind.

5. Die Abdeckung gemäß Patentanspruch 1 ist dadurch gekennzeichnet, daß es sich bei dem Winkel des Tetraeders (6) um einen einspringenden Winkel handelt und daß das Winkelstück (14) einen aufrechten Schenkel (15) in Form eines Winkelprofils (16) und ein flaches Oberteil mit großen, spitzen Außenrändern aufweist. Diese lassen sich gemäß den eckförmigen Kantenbereichen spalten, um sich an den tatsächlichen Wert des Winkels anzupassen. Der hintere Bereich des aufrechten Schenkels ist mit Laschen (29) versehen, die mit den Arretierstrukturen eines jeden Teilabschnitts (2) und (3) im Hinblick auf die Tiefeneinstellung zusammenwirken.

6. Die Abdeckung gemäß Patentanspruch 1 ist dadurch gekennzeichnet, daß es sich beim Winkel des Tetraeders (6) um einen ausspringenden Winkel handelt und daß das Winkelstück (54) gekrümmt und umgreifend ist und aus einem aufrechten Teil in Form einer gebogenen Platte (55) und einem flachen und gekrümmten Oberteil (56) mit kleinen, spaltbaren Innenrändern gebildet wird. Der hintere Bereich des aufrechten Teils ist mit Füßen (29) versehen, die mit den Arretierstrukturen eines jeden Teilabschnitts (2) und (3) im Hinblick auf die Tiefeneinstellung zusammenwirken.
